# EUROPEAN PATENT SPECIFICATION

(11) **EP 2 165 902 B1**
(45) Date of publication and mention of the grant of the patent: **07.09.2011**
(21) Application number: 08290892.2
(22) Date of filing: 22.09.2008
(51) Int. Cl.: B60T 13/66, B60T 17/22

(54) **Rail vehicle electro-pneumatic brake system and a rail vehicle equipped with such system**
Schienenfahrzeug-Elektropneumatikbremssystem und Schienenfahrzeug mit diesem System
Système de freinage électropneumatique de véhicule ferroviaire et véhicule ferroviaire équipé d'un tel système

(43) Date of publication of application: 24.03.2010
(73) Proprietor: Bombardier Transportation GmbH, 10785 Berlin (DE)
(72) Inventor: Sedwell, Jeff, Smalley, Derbyshire DE7 6JS (GB); Plamper, Stefan, 13467 Berlin (DE)
(74) Representative: Novagraaf Technologies

(56) References cited:
- GB-A- 219 762
- US-A- 3 799 623

## Description

### TECHNICAL FIELD OF THE INVENTION

The invention relates to a rail vehicle equipped with an electro-pneumatic brake system. It relates more particularly to the recovery of a failed rail vehicle equipped with an electro-pneumatic brake system.

### BACKGROUND ART

Modern railway vehicles are equipped with electronically controlled electro-pneumatic brake systems. It is mandatory that these systems are fail safe to the same level of safety as provided by a traditional UIC two-pipe air brake system. In order to ensure that the electro-pneumatic brake system is fail safe the electro-pneumatic brake control is configured on an "energise to release" basis. This means that an electro-pneumatic valve is energised by a safety wire that runs throughout the train consist in order to release the emergency brake. If this circuit is broken for any reason all the electro-pneumatic valves that were energised become de-energised and cause the emergency valves to make a brake application.

The energy source used to apply brake force is in the form of compressed air. This compressed air is distributed from an air supply module somewhere on the train consist, to all the cars via a main reservoir pipe. On each car compressed air is taken from the main reservoir pipe into a brake supply reservoir via a non-return valve. This brake supply reservoir located in one car constitutes a protected brake energy supply, which is used to supply air to the friction brakes on the car, when demanded by the control system, irrespective of the condition of the main reservoir pipe. Both the main reservoir pipe pressure and the pressure in the brake supply reservoir are monitored by pressure switches. The pressure switches have electrical contacts that will cause the emergency brake wire to be de-energised should the air pressure in either system fall below pre-defined limits.

There is therefore potential for various types of system failures that can cause deactivation of the emergency brake wire, such as major air leak in the main reservoir pipe, break in the emergency brake wire for any reason or loss of electric control voltage. All of these failures cause brakes to be applied. A major leak in the main reservoir pipe would also cause the spring-applied parking brake to be applied, since this spring-applied parking brake is normally held off by the main reservoir pipe pressure.

In case of system failure and automatic application of the brakes, the dead rail vehicle needs to be rescued by another rail vehicle equipped with a pneumatic air supply. The operations for connecting the rescuing vehicle with the dead vehicle and for releasing the air brakes and spring-applied parking brakes on the failed rail vehicle are complex and time consuming. Depending on the type of failure the crew may need to operate isolating cocks on every vehicle to release the failsafe application of emergency brakes. If the failure is due to a low main reservoir pipe pressure caused by a major leak the crew will also need to mechanically release all the spring-applied parking brakes. The crew may also have to operate the brake cylinder isolating cocks on every car and spring-applied parking brake release mechanism on every spring-applied parking brake actuator. If the train is electrically dead there is no means provided to release the air brakes or spring applied parking brakes from a central control and the isolations and operation of release mechanisms have to be done by visiting each device on every car in the dead train. This process takes several minutes per car. The time needed to ensure that all brakes are released and wheels therefore free to rotate when the dead vehicle is pushed or pulled by the rescuing rail vehicle is dependent on the number of cars in the dead vehicle. This rescuing time adds to the disruption caused by having a dead train blocking the track.

To facilitate rescue, it has sometimes been proposed to install a conventional UIC (International Union of Railways) or AAR (Association of American Railroads) air brake control in parallel with the electro-pneumatic brake control. This means that every vehicle has to carry both control systems, the UIC or AAR air brake control being used only for rescue. The control is purely pneumatic and the electrically dead train can be rescued and have its brakes controlled by any rescuing vehicle also provided with a UIC or AAR air brake system. However this parallel system does not provide a means to release the spring-applied parking brake and manual release is still therefore required if the failure is caused by a major fault in the main reservoir pipe. The additional parallel purely pneumatic system adds cost and weight and it does not provide a single brake release point in all circumstances of failure. Reference can be made to for example US 3722623 for a conventional brake control.

Thus, there is a need for a simplified parallel pneumatic system that would take advantage of at least part of the existing piping of the electro-pneumatic brake system and would allow to remotely release all the brakes of a failed rail vehicle.

### SUMMARY OF THE INVENTION

The foregoing shortcomings of the prior art are addressed by the present invention. According to a first aspect of the invention, there is provided a rail vehicle pneumatic brake system comprising:
- friction brake means;
- a brake supply reservoir;
- a main pipe for supplying compressed air to the brake supply reservoir;
- at least one air brake actuator provided with an air brake cylinder and an air brake mechanism linked to the friction brake means so as to move against the bias of a return spring from a released position to an engaged position to engage the friction brake means upon application of an air brake pressure to the air brake cylinder;
- electro-pneumatic control valve means connected between the brake supply reservoir and the air brake cylinder, wherein the electro-pneumatic control valve means cause the air brake cylinder to be connected to the brake supply reservoir when de-energised and cause the air brake cylinder to be vented when energised;
- a rescue pipe; and
- air brake release valve means connected to the rescue pipe for isolating the brake supply reservoir from the electro-pneumatic control valve means and for venting the air brake cylinder when pressure is available in the rescue pipe and for connecting the brake supply reservoir to the electro-pneumatic control valve means when no pressure is available in the rescue pipe.

In case of failure of the electro-pneumatic brake control valve means or of any device in the electrical control system causing the air brake to be applied the rescue pipe will be connected to a pressure source, e.g. the brake pipe (if fitted) or main reservoir pipe of the rescuing rail vehicle. Thanks to the rescue pipe and air brake release valve means, only one single connection is required between the failed rail vehicle and the rescuing train or locomotive to bypass the electro-pneumatic brake control valve means and provide remote release of the air brakes of the failed vehicle. The proposed system allows the air brakes on the failed train to be released without the need to make any isolation and without any electrical connection.

According to a preferred embodiment, the air brake release valve means is composed of one or more pneumatically operated valves, at least one of which will be preferably operated by the rescue pipe pressure. Thus, a fully pneumatic system is provided, which does not require any wiring between the failed rail vehicle and the rescuing vehicle.

According to one embodiment, the air brake release valve means can comprise a five-port two-position valve, which provides a compact system. Alternatively, the air brake release valve means may comprise a three-port two-position valve and a two-port two-position valve. The three-port two-position valve is a pneumatically operated spring returned normally open valve. The two-port two-position valve is a normally closed pneumatically operated spring returned valve connected to the air brake cylinder. The one or more pneumatically operated valves included in the air brake release valve means may be housed in a common body.

According to a preferred embodiment, the rail vehicle pneumatic brake system further comprises:
- at last one spring-applied parking brake actuator provided with a parking brake release cylinder and a parking brake mechanism linked to the friction brake means so as to move against the bias of a parking brake spring from an engaged position to a released position upon application of a compressed air pressure to the parking brake release cylinder and so as to apply a parking brake force generated by the parking brake spring to engage the friction brake means when no air pressure is provided to the parking brake release cylinder; and
- parking brake release valve means for connecting either the main pipe or the rescue pipe to the parking brake cylinder when sufficient pressure is available in either the main pipe or the rescue pipe to move the parking brake mechanism to the release position.

The same rescue pipe is used for automatically and remotely releasing the air brake actuators and spring-applied parking brake actuators.

Advantageously, the parking brake release valve means can be composed of one or more pneumatically operated valves, at least one of which is preferably operated by the rescue pipe pressure.

The spring-applied parking brake actuator may be connected to the main pipe either directly or via a parking brake control valve and is normally released by the main pipe pressure. The pressure required to fully release the spring applied parking brake is directly proportional to the force required to compress the installed spring. As release air pressure rises the parking brake force is gradually reduced until the spring force is completely counteracted by the force created by the release air pressure. Thus, the parking brake will be partially applied whenever the release pressure is less than the pressure that is required to fully release the parking brake. The level of application is inversely proportional to the release pressure, i.e. no pressure corresponds to full spring parking brake force, while full release pressure corresponds to no parking brake force.

According to a preferred embodiment, the rescue pipe is connected to the rescuing vehicles brake pipe and fluctuation in the rescue pipe pressure due to normal air brake control in the rescuing vehicle will cause partial re-application of the spring applied parking brakes on the dead vehicle being rescued whenever the rescuing vehicle applies its own brakes. If the rescuing vehicle applies emergency brakes the brake pipe pressure (and hence the rescue pipe pressure) falls to zero and the spring parking brakes of the dead train are fully re-applied.

Whenever the pressure in the rescue pipe falls below the required full release pressure the spring-applied parking brakes are re-applied. This allows control of the spring-applied parking brake in emergency situation, e.g. in combination with an emergency cock for venting the rescue pipe.

Advantageously, the spring-applied parking brake release valve means can comprise an additional valve which will isolate the spring-applied parking brake cylinder from pressure fluctuations in the rescue pipe when the pressure in the rescue pipe is within the range of normal air brake application. Thus, a slight drop in the rescue pipe pressure will not result in partial application of the spring-applied parking brakes. This makes it possible to feed the rescue pipe with a fluctuating pressure, e.g. from a brake pipe of a locomotive, which varies to control the brakes of the rescuing train. However when the pressure in the rescue pipe falls below the normal air brake range towards the emergency brake pipe pressure (zero) then the spring applied parking brakes will be fully re-applied

The parking brake release valve means can include a shuttle valve (OR Valve) inserted between the main pipe, the rescue pipe and the parking brake cylinder in a way that will allow the spring-applied parking brake to be released if pressure is available in normal main pipe or in case of failure of the main pipe if an air supply from the rescue pipe is available.

Advantageously, the parking brake release valve means and air brake release valve means may be assembled into a common housing, which facilitates retrofitting.

Advantageously, the rail vehicle pneumatic brake system further comprises a connector for connecting the rescue pipe to a rescue hose. The rescue hose will be connected to a pressure source on the rescuing rail vehicle, e.g. the brake pipe of a locomotive or main brake pipe of a coach.

The rescue pipe will not normally contain any compressed air, and for safety considerations will not be connected to any other pipework that normally contains compressed air. In this way there are no fault conditions that could cause unwanted brake release.

Preferably, the rail vehicle pneumatic brake further comprises an emergency cock for venting the rescue pipe. Actuating the emergency cock will result in re-establishing the connection between the brake supply reservoir and the electro-pneumatic control valve means. The air brakes will automatically be re-applied if the electro-pneumatic control valve means are still de-energised and pressure is still available in the brake supply reservoir. Moreover, the spring-applied parking brake will automatically be applied.

According to a second aspect of the invention, there is provided a rail vehicle comprising a pneumatic brake system as described hereinbefore.

The emergency cock may preferably be located within the a car body of the rail vehicle to allow actuation by the crew during rescue.

The rail vehicle may comprise a plurality of carriages, each carriage being provided with a pneumatic brake system as claimed in any one of the preceding claims, the rail vehicle further comprising hoses for connecting the rescue pipes and building a continuous rescue supply line.

### BRIEF DESCRIPTION OF THE DRAWINGS

Other advantages and features of the invention will become more clearly apparent from the following description of specific embodiments of the invention given as non-restrictive examples only and represented in the accompanying drawings in which:
- figure 1 is diagrammatic illustration of a pneumatic brake system according to a first embodiment of the invention;
- figure 2 is diagrammatic illustration of a rail vehicle provided with the pneumatic brake system of figure 1;
- figure 3 illustrates a second embodiment of the pneumatic brake system of the invention;
- figure 4 illustrates a third embodiment of the pneumatic brake system of the invention; and
- figure 5 illustrates a variant of a spring-applied brake actuator and an air-applied brake actuator used in one embodiment of the invention.

### DETAILED DESCRIPTION OF ONE EMBODIMENT

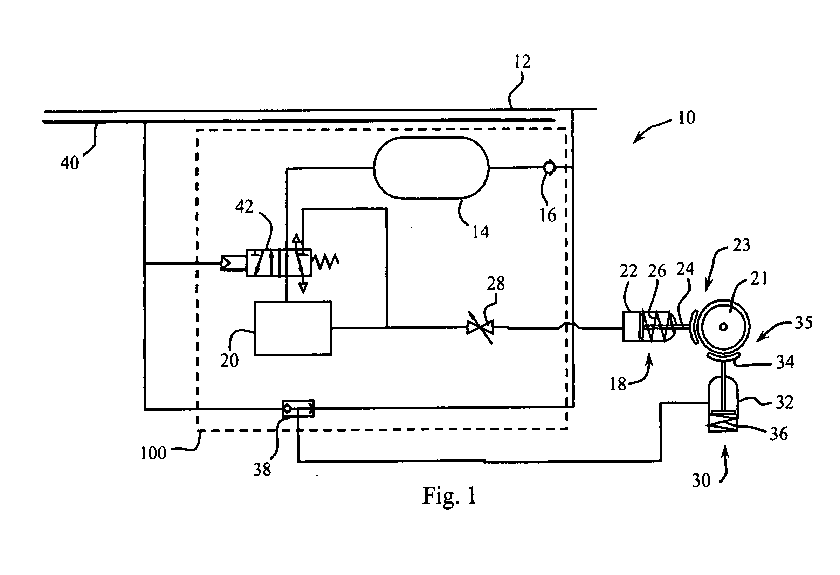

Referring to figure 1, the pneumatic brake system 10 of a rail vehicle includes a main reservoir pipe 12 for supplying a main pipe pressure to a brake supply reservoir 14 through a check valve 16, and one or more air brake actuators 18 connected to the brake supply reservoir 14 via electro-pneumatic control valve means 20, which may include one or more electro-pneumatic valves. In figure 1, only one wheel 21 of the rail vehicle is represented. However, it should be clear that the brake system can be used to brake more than one wheel, in which case the electro-pneumatic valve will be connected to a plurality of air brake actuators 18.

The air brake actuator 18 combines an air cylinder 22 and a mechanism 24 linked to a friction brake 23. The mechanism 24 moves from a released position to an engaged position to engage the friction brake 23 upon application of an air or emergency brake pressure to the air brake cylinder and is biased towards the released position by a return spring 26.

The electro-pneumatic control valve means 20 are connected between the brake supply reservoir 14 and the air brake cylinder 22. The electro-pneumatic control valve means 20 cause the air brake cylinder 22 to be connected to the brake supply reservoir 14 when de-energised and cause the air brake cylinder 22 to be vented when energised. An isolating cock 28 is normally installed in the pipe to the air brake cylinders.

The pneumatic brake system also includes one or more spring-applied parking brake actuators 30. Each spring-applied parking brake actuator 30 is provided with a release cylinder 32 and a mechanism 34 linked to a friction brake 35. The mechanism 34 moves from an engaged position to a released position upon application of a compressed air pressure and is spring-biased towards the engaged position by a biasing spring 36. The spring-applied parking brake actuators, only one of which is illustrated in figure 1, are connected to the main reservoir pipe or the rescue pipe via a spring-applied parking brake release valve 38, which will be described hereinafter.

The pneumatic system is also provided with a rescue pipe 40 and a five-port, two-position air brake release valve 42 controlled by the rescue pipe pressure. The air brake release valve 42 has one port connected to the brake supply reservoir 14, one port connected to an inlet port of the electro-pneumatic control valve means 20 and one port connected to the air brake cylinder 22 and the two remaining ports are connected to venting means.

When no pressure is applied to the control port of the air brake release valve 42, the port connected to the air brake cylinder 22 is closed while the brake supply reservoir 14 is connected to the electro-pneumatic control valve means 20 via the respective open ports of the air brake release valve 42. Whenever the rescue pipe 40 is pressurized, the air brake release valve 42 is moved to an active position to block the feed from brake supply reservoir 14 to the electro-pneumatic control valve means 20, vent the air brake cylinder 22 and any air pressure in the electro-pneumatic control valve.

The spring-applied parking brake release valve 38 is a shuttle valve with one inlet port connected to the main reservoir pipe 12, the other inlet port connected to the rescue pipe 40 and its outlet port connected to the spring-applied parking brake cylinder 32. This shuttle valve 38 connects the main reservoir pipe to the spring-applied parking brake cylinder 32 and releases the spring-applied parking brake 30 when pressure is available in the main reservoir pipe 12 or in the rescue pipe 40. It allows the pressure to be released from the spring-applied parking brake cylinder 32 when no pressure is available on both the main reservoir pipe 12 and the rescue pipe 40.

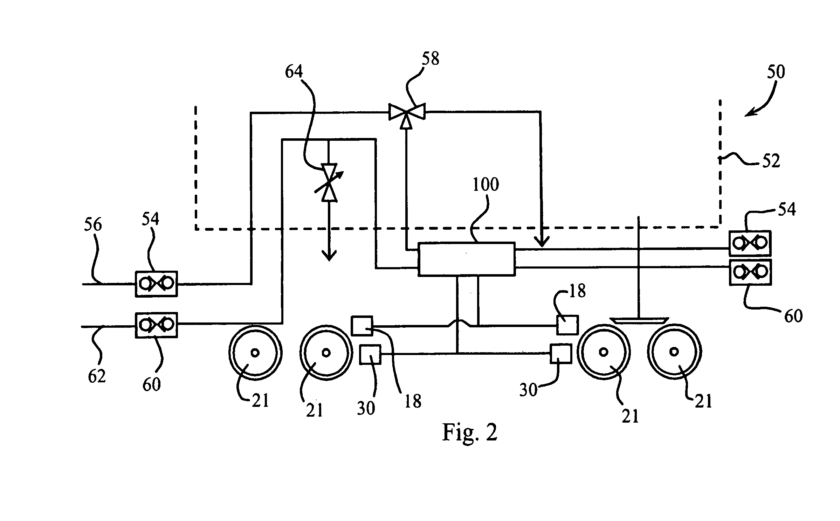

The rescue pipe, air brake release valve 42 and shuttle valve 38 form together a pneumatic remote brake release system 100 which is connected into the normal electro-pneumatic brake system 10. As illustrated in figure 2, this remote brake release system 100 is connected to the main reservoir pipe 12 which extends along the length of the rail car 50, and is connected to the next cars via connectors 54 and connection hoses 56. Similarly, the rescue pipe 40 runs along the length of the rail car 50, below the car body 52, and is provided with connectors 60 and connecting hoses 62 for connecting it to a rescuing rail vehicle and/or to the next cars. The rescue pipe 40 can be provided with an emergency venting valve 64, which will preferably be located close to the emergency valve 58 of the main reservoir pipe 12. The rescue pipes 40 of adjacent cars can thus be connected together to build a continuous rescue supply line.

For safety considerations the rescue pipe 40 is not connected to any other pipework that normally contains compressed air. In this way there are no fault conditions that could cause unwanted brake release.

In normal circumstances, the rescue pipe 40 remains depressurised. Thus, both the air brake release valve 42 and the spring-applied parking brake release valve 38 are inactive. The electro-pneumatic control valve means 20 are therefore connected to the brake supply reservoir while the spring-applied parking brake 30 is controlled by the main reservoir pipe pressure.

In case of failure, such as a loss of pressure in the main reservoir pipe 12 leading to an automatic application of the air brakes 18 and spring-applied parking brakes 30 or an electrical or mechanical failure of the electro-pneumatic valve means 20 generating a direct application of the air brake 18, the rail vehicle is stopped and needs to be rescued. A rescuing rail vehicle, which can be a locomotive or a train, will be coupled to the failed train and a pneumatic pipe of the rescuing vehicle, e.g. the brake pipe of a locomotive or main reservoir pipe of a coach, will be connected to the rescue pipe 40.

When the pressure rises in the rescue pipe 40, the air brake release valve 42 is actuated so as to isolate the brake supply reservoir 14 and vent the air brake cylinder 22 and the electro-pneumatic valve means 20. This loss of pressure in the air brake cylinder 22 leads to the release of the air brake 18. Simultaneously, the rescue pipe pressure opens the shuttle valve 38 and releases the spring-applied parking brake 30. The failed railed vehicle can then be towed by the rescuing rail vehicle.

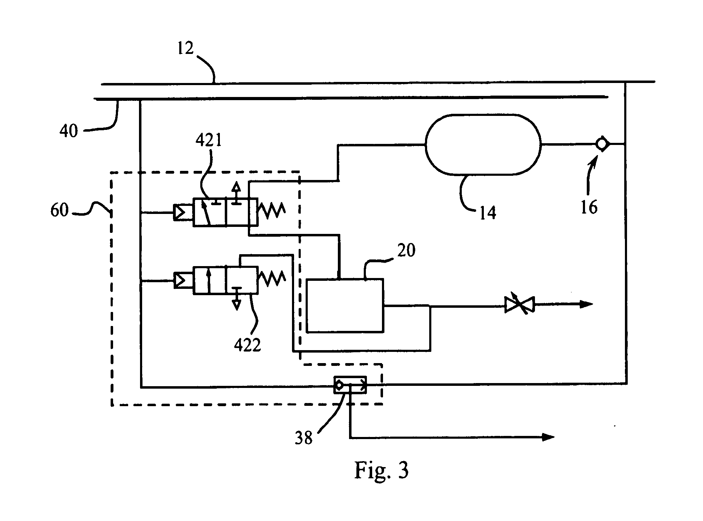

In the embodiment of figure 3, the single five-port two-position air brake release valve of the first embodiment has been replaced with two valves 421, 422 controlled by the rescue pipe pressure, one of which is dedicated to the isolation of the brake supply reservoir and the venting of the electro-pneumatic brake control valve means 20, while the other is able to vent the air brake cylinder. The two valves 421, 422 may be housed together with the spring-applied parking brake release valve 38 in a common valve body 60 to form a single remote brake release valve means.

Similarly, in a variant not illustrated, the single five-port two-position air brake release valve of the first embodiment can be housed together with the shuttle valve 38 or the check valve 382 in a common housing.

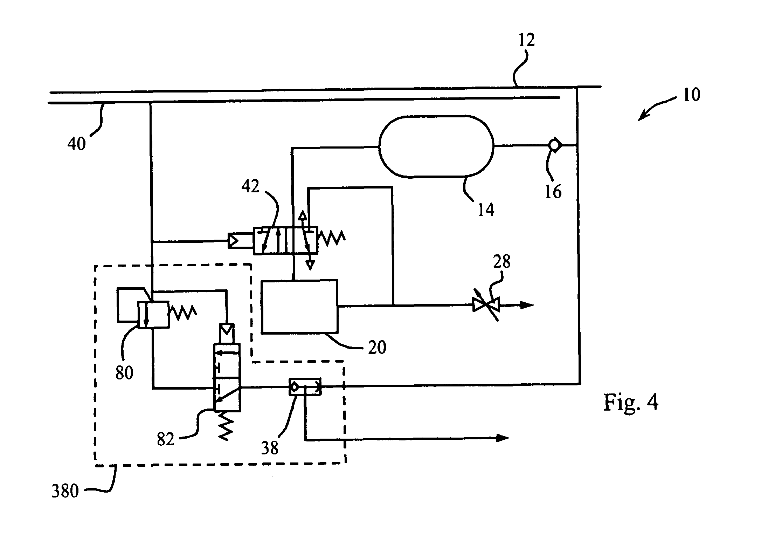

The embodiment of figure 4 is identical to the embodiment of figure 1, except for the addition of a charging valve 80 and a pilot valve 82 in series in the line between the rescue pipe 40 and the shuttle valve 38. As air pressure builds up to a first threshold (e.g. 2 bar) in the rescue pipe 40 the pilot operated three-port two-position valve 82 will be operated thus connecting the charging valve 80 to the spring-applied parking brake release valve 38. When rescue pipe pressure builds up to a second threshold (e.g. 4.8 bar) the charging valve 80 will open and allow rescue pipe pressure through the now open pilot 3/2 valve 82 to the spring applied parking brake release valve 38. This air pressure will cause the spring applied parking brake to be released. In the event that the rescue pipe pressure falls below the second threshold the charging valve 80 will close thus maintaining the spring applied parking brake release pressure at the second threshold pressure and preventing a partial application of the spring applied parking brakes. However if the rescue pipe falls below the first threshold then the pilot operated 3/2 valve 82 will revert to the spring returned position causing the spring-applied parking brake pressure to be vented and thus the spring applied parking brake will be re-applied.

Thus, the spring-applied parking brakes 30 will remain in the released state despite fluctuations of the rescue pipe pressure between the first and second threshold. The rescue pipe can therefore be connected to a pressure source providing a variable pressure, such as a brake pipe of a rescuing locomotive.

The charging valve 80, pilot valve 82 and check valve 38 constitute together remote spring-applied parking brake release valve means 380 which can be housed in a common valve body.

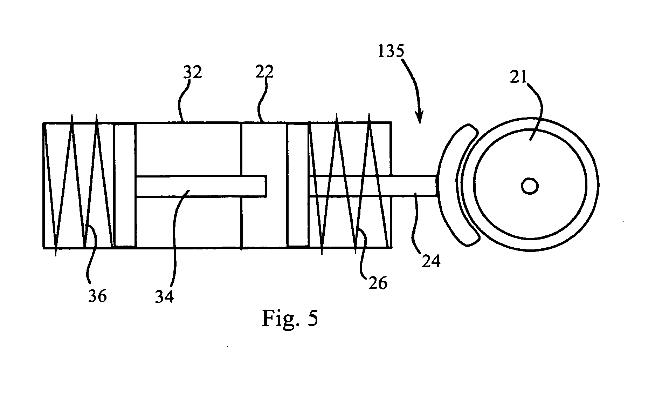

In the embodiments of figures 1 to 4, the brakes 23, 35 constitute friction brake means applied to the same wheel 21. As shown in figure 5, one friction brake 135 can be used as friction brake means instead of the two brakes illustrated in the previous embodiments. In this embodiment, the piston or mechanism 34 of the spring-applied actuator 32 is linked to the brake pads via the piston or mechanism 24 of the air-applied actuator 24, provided the spring 26 of the air-applied actuator is significantly weaker than the spring 36 of the spring-applied actuator. If no pressure is present in the cylinder of the spring-applied actuator 32 the powerful spring 36 of the spring-applied parking brake actuator 32 moves the pistons 34, 24 and engage the brake 135 irrespective of the condition of the air-applied brake actuator. The air-applied brake actuator becomes active to control the position of the brake only when the cylinder of the spring-actuator is pressurized.

## Claims

1. A rail vehicle pneumatic brake system (10) comprising:
- friction brake means (23, 35, 135);
- a brake supply reservoir (14);
- a main pipe (12) for supplying compressed air to the brake supply reservoir;
- at least one air brake actuator (18) provided with a air brake cylinder (22) and an air brake mechanism (24) linked to the friction brake means so as to move against the bias of a return spring (26) from a released position to an engaged position to engage the friction brake means upon application of an air brake pressure to the air brake cylinder; and
- electro-pneumatic control valve means (20) connected between the brake supply reservoir and the air brake cylinder, wherein the electro-pneumatic control valve means cause the air brake cylinder to be connected to the brake supply reservoir when de-energised and cause the air brake cylinder to be vented when energised;
the rail vehicle pneumatic brake systems being **characterised in that** it further comprises:
- a rescue pipe (40); and
- air brake release valve means (42, 421, 422) connected to the rescue pipe for isolating the brake supply reservoir from the electro-pneumatic control valve means and for venting the air brake cylinder when pressure is available in the rescue pipe and for connecting the brake supply reservoir to the electro-pneumatic control valve means when no pressure is available in the rescue pipe.

2. The rail vehicle pneumatic brake system of claim 1, wherein the air brake release valve means is composed of one or more pneumatically operated valves (42, 421, 422).

3. The rail vehicle pneumatic brake system claim 2, wherein at least one of the one or more pneumatically operated valves of the air brake release valve means is operated by the pressure in the rescue pipe.

4. The rail vehicle pneumatic brake system claim 2 or claim 3, wherein the one or more pneumatically operated valves of the air brake release valve means are housed in a common body.

5. The rail vehicle pneumatic brake system of any one of the preceding claims, further comprising:
- at last one spring-applied parking brake actuator (30) provided with a parking brake release cylinder (32) and a parking brake mechanism (34) linked to the friction brake means so as to move against the bias of a parking brake spring (36) from an engaged position to a released position upon application of a compressed air pressure to the brake release cylinder and so as to apply a parking brake force generated by the parking brake spring (36) to engage the friction brake means when no air pressure is provided to the parking brake release cylinder; and
- parking brake release valve means (38, 380) for connecting either the main pipe or the rescue pipe to the parking brake when sufficient pressure is available in either the main pipe or the rescue pipe and releasing the spring-applied parking brake when sufficient pressure is available in either the main pipe or the rescue pipe to move the parking brake mechanism to the release position.

6. The rail vehicle pneumatic brake system of claim 5, wherein the parking brake release valve means is composed of one or more pneumatically operated valves (38, 80, 82).

7. The rail vehicle pneumatic brake system claim 6, wherein at least one of the pneumatically operated valves of the parking brake release valve means is controlled by the pressure in the rescue pipe.

8. The rail vehicle pneumatic brake system claim 6 or claim 7, wherein the one or more pneumatically operated valves of the parking brake release valve means are housed in a common body.

9. The rail vehicle pneumatic brake system of any one of claims 5 to 8, wherein the parking brake release valve means comprise means for connecting the rescue pipe to the spring-applied brake actuator and releasing the spring-applied brake actuator when pressure in the rescue pipe rises above and first threshold and venting means (82, 38) for venting the spring-applied parking brake actuator when no pressure is available in the main pipe and the pressure in the rescue pipe is below a second threshold, lower than the first threshold.

10. The rail vehicle pneumatic brake system of claim 9, wherein the parking brake release valve means comprise isolating means (80) for isolating the parking brake cylinder from the rescue pipe when the pressure in the rescue pipe is between the second threshold and the first threshold.

11. The rail vehicle pneumatic brake system of any one of claims 7 to 11, wherein the parking brake release valve means include a shuttle valve (38).

12. The rail vehicle pneumatic brake system of any one of claims 7 to 12, wherein the parking brake release valve means and the at least one air brake release valve means are located in a common housing.

13. A rail vehicle comprising the pneumatic brake system of claim of any one of the preceding claims, wherein the rescue pipe is not connected to any other pipework of the rail vehicle that contains compressed air under normal conditions.

14. A rail vehicle comprising the pneumatic brake system of claim 7, further comprising an emergency cock (64) located within a car body of the rail vehicle for venting the rescue pipe.

15. A rail vehicle comprising a plurality of carriages, each carriage being provided with a pneumatic brake system as claimed in any one of claims 1 to 13, the rail vehicle further comprising hoses for connecting the rescue pipes and building a continuous rescue supply line.

## Patentansprüche

1. Pneumatisches Bremssystem (10) für Schienenfahrzeuge, umfassend:
- Reibungsbremsmittel (23, 35, 135);
- einen Bremsversorgungsbehälter (14);
- eine Hauptleitung (12) zum Versorgen des Bremsversorgungsbehälters mit Druckluft;
- wenigstens einen Druckluftbremsaktuator (18), der mit einem Druckluftbremszylinder (22) und einem pneumatischen Bremsmechanismus (24) versehen ist, der mit den Reibungsbremsmitteln verbunden ist, um sich bei Anlegen eines Druckluftbremsdrucks an den Druckluftbremszylinder zum Betätigen der Reibungsbremseinrichtung gegen die Vorspannung einer Rückholfeder (26) aus einer gelösten Position auf eine betätigte Position zu bewegen; und
- elektropneumatische Steuerventilmittel (20), die zwischen dem Bremsversorgungsbehälter und dem Druckluftbremszylinder angeschlossen sind, wobei die elektropneumatischen Steuerventilmittel bewirken, dass der Druckluftbremszylinder mit dem Bremsversorgungsbehälter verbunden ist, wenn sie nicht mit Energie versorgt sind, und dass der Druckluftbremszylinder entlüftet wird, wenn sie mit Energie versorgt sind;
wobei das pneumatische Bremssystem für Schienenfahrzeuge **dadurch gekennzeichnet ist, dass** es ferner umfasst:
- eine Notfallleitung (40); und
- mit der Notfallleitung verbundene Druckluftbremsen-Löseventilmittel (42, 421, 422) zum Isolieren des Bremsdruckbehälters von den elektropneumatischen Steuerventilmitteln und zum Entlüften des Druckluftbremszylinders, wenn Druck in der Notfallleitung verfügbar ist, und zum Verbinden des Bremsdruckbehälters mit den elektropneumatischen Steuerventilmitteln, wenn in der Notfallleitung kein Druck verfügbar ist.

2. Pneumatisches Bremssystem für Schienenfahrzeuge nach Anspruch 1, wobei die Druckluftbremsen-Löseventilmittel aus einem oder mehreren pneumatisch betätigten Ventilen (42, 421, 422) aufgebaut sind.

3. Pneumatisches Bremssystem für Schienenfahrzeuge nach Anspruch 2, wobei wenigstens eines der ein oder mehreren pneumatisch betätigten Ventile der Druckluftbremsen-Löseventilmittel von dem Druck in der Notfallleitung betätigt wird.

4. Pneumatisches Bremssystem für Schienenfahrzeuge nach Anspruch 2 oder Anspruch 3, wobei die ein oder die mehreren pneumatisch betätigten Ventile der Druckluftbremsen-Löseventilmittel in einem gemeinsamen Körper untergebracht sind.

5. Pneumatisches Bremssystem für Schienenfahrzeuge nach einem der vorhergehenden Ansprüche, das ferner umfasst:
- wenigstens eine federbetätigte Feststellbremsaktuator (30), die mit einem Feststellbremsenlösezylinder (32) und einem Feststellbremsmechanismus (34) versehen ist, der mit den Reibungsbremsmitteln verbunden ist, um sich bei Anlegen eines Druckluftdrucks an den Bremsenlösezylinder gegen die Vorspannung einer Feststellbremsfeder (36) aus einer betätigten Position in eine gelöste Position zu bewegen und um eine von der Feststellbremsfeder (36) erzeugte Feststellbremskraft zum Betätigen der Reibungsbremseinrichtung auszuüben, wenn der Feststellbremsenlösezylinder nicht mit Luftdruck versorgt wird; und
- Feststellbremsen-Löseventilmittel (38, 380) zum Verbinden der Hauptleitung oder der Notfallleitung mit der Feststellbremse, wenn genug Druck in der Hauptleitung oder in der Notfallleitung verfügbar ist, und zum Lösen der federbetätigten Feststellbremse, wenn genug Druck in der Hauptleitung oder in der Notfallleitung verfügbar ist, um den Feststellbremsmechanismus in die gelöste Position zu bewegen.

6. Pneumatisches Bremssystem für Schienenfahrzeuge nach Anspruch 5, wobei die Feststellbremsen-Löseventilmittel aus einem oder mehreren pneumatisch betätigten Ventilen (38, 80, 82) aufgebaut ist.

7. Pneumatisches Bremssystem für Schienenfahrzeuge nach Anspruch 6, wobei wenigstens eines der pneumatisch betätigten Ventile der Feststellbremsen-Löseventilmittel vom Druck in der Notfallleitung gesteuert wird.

8. Pneumatisches Bremssystem für Schienenfahrzeuge nach Anspruch 6 oder Anspruch 7, wobei das eine oder die mehreren pneumatisch betätigten Ventile der Feststellbremsen-Löseventilmittel in einem gemeinsamen Körper untergebracht sind.

9. Pneumatisches Bremssystem für Schienenfahrzeuge nach einem der Ansprüche 5 bis 8, wobei die Feststellbremsen-Löseventilmittel Mittel zum Verbinden der Notfallleitung mit dem federbetätigten Bremsaktuator und zum Lösen des federbetätigten Bremsaktuators, wenn der Druck in der Notfallleitung über einen ersten Schwellenwert steigt, und Entlüftungsmittel (82, 38) zum Entlüften der federbetätigten Feststellbremsaktuator, wenn in der Hauptleitung kein Druck verfügbar ist und der Druck in der Notfallleitung unter einem zweiten Schwellenwert liegt, der niedriger als der erste Schwellenwert ist, aufweist.

10. Pneumatisches Bremssystem für Schienenfahrzeuge nach Anspruch 9, wobei die Feststellbremsen-Löseventilmittel eine Isoliereinrichtung (80) zum Isolieren des Feststellbremszylinders von der Notfallleitung, wenn der Druck in der Notfallleitung zwischen dem zweiten Schwellenwert und dem ersten Schwellenwert liegt, umfasst.

11. Pneumatisches Bremssystem für Schienenfahrzeuge nach einem der Ansprüche 7 bis 10, wobei die Feststellbremsen-Löseventilmittel ein Wechselventil (38) umfasst.

12. Pneumatisches Bremssystem für Schienenfahrzeuge nach einem der Ansprüche 7 bis 11, wobei sich die Feststellbremsen-Löseventilmittel und das wenigstens eine Druckluftbremsen-Löseventilmittel in einem gemeinsamen Gehäuse befinden.

13. Pneumatisches Bremssystem für Schienenfahrzeuge nach einem der vorhergehenden Ansprüche, wobei die Notfallleitung unter normalen Bedingungen mit keiner anderen Leitungsanordnung des Schienenfahrzeugs verbunden ist, die Druckluft enthält.

14. Schienenfahrzeug, welches das pneumatische Bremssystem nach Anspruch 7 aufweist, das ferner einen Nothahn (64) zum Entlüften der Notfallleitung aufweist, der sich in einem Wagenkasten des Schienenfahrzeugs befindet.

15. Schienenfahrzeug, das mehrere Wagen umfasst, wobei jeder Wagen mit einem pneumatischen Bremssystem nach einem der Ansprüche 1 bis 13 versehen ist, wobei das Schienenfahrzeug ferner Schläuche zum Verbinden der Notfallleitungen und zum Herstellen einer kontinuierlichen Notfallversorgungsleitung aufweist.

## Revendications

1. Système de frein pneumatique de véhicule sur rail (10) comprenant:
- un moyen de frein à friction (23, 35, 135) ;
- un réservoir d'alimentation de frein (14) ;
- un tuyau principal (12) pour fournir de l'air comprimé au réservoir d'alimentation de frein ;
- au moins un actionneur de frein à air (18) prévu avec un cylindre de frein à air (22) et un mécanisme de frein à air (24) relié au moyen de frein à friction de façon à déplacer contre la sollicitation d'un ressort de rappel (26) d'une position libérée à une position en prise pour mettre en prise le moyen de frein à friction lors de l'application d'une pression de frein à air au cylindre de frein à air ; et
- un moyen de soupape de commande électropneumatique (20) raccordé entre le réservoir d'alimentation de frein et le cylindre de frein à air, où le moyen de soupape de commande électropneumatique amène le cylindre de frein à air à être raccordé au réservoir d'alimentation lorsqu'il est n'est plus alimenté et amène le cylindre de frein à air à être ventilé lorsqu'il est alimenté ;
le système de frein pneumatique pour véhicule sur rail étant **caractérisé en ce qu'**il comprend en outre :
- un tuyau de sauvetage (40) ; et
- un moyen de soupape de relâchement de frein à air (42, 421, 422) raccordé au tuyau de sauvetage pour isoler le réservoir d'alimentation de frein du moyen de soupape de commande électropneumatique et pour ventiler le cylindre de frein à air lorsqu'une pression est disponible dans le tuyau de sauvetage et pour raccorder le réservoir d'alimentation de frein au moyen de soupape de commande électropneumatique lorsque aucune pression n'est disponible dans le tuyau de sauvetage.

2. Système de frein pneumatique pour véhicule sur rail selon la revendication 1, dans lequel le moyen de soupape de relâchement de frein à air est composé d'une ou plusieurs soupapes actionnées pneumatiquement (42, 421, 422).

3. Système de frein pneumatique pour véhicule sur rail selon la revendication 2, dans lequel au moins une de la ou des soupapes actionnées pneumatiquement du moyen de soupape de relâchement de frein à air est actionnée par la pression dans le tuyau de sauvetage.

4. Système de frein pneumatique pour véhicule sur rail selon la revendication 2 ou la revendication 3, dans lequel la ou les soupapes actionnées pneumatiquement du moyen de soupape de relâchement de frein à air sont logées dans un corps commun.

5. Système de frein pneumatique pour véhicule sur rail selon l'une quelconque des revendications, comprenant en outre :
- au moins un actionneur de frein d'immobilisation à serrage par ressort (30) prévu avec un cylindre de relâchement de frein d'immobilisation à serrage par ressort (32) et un mécanisme de frein d'immobilisation (34) relié au moyen de frein à friction de façon à déplacer contre la sollicitation d'un ressort de frein d'immobilisation (36) d'une position en prise à une position relâchée lors de l'application d'une pression d'air comprimé au cylindre de relâchement de frein et de façon à appliquer une force de frein d'immobilisation générée par le ressort de frein d'immobilisation (36) pour mettre en prise le moyen de frein à friction lorsque aucune pression d'air n'est fournie au cylindre de relâchement de frein d'immobilisation ; et
- un moyen de soupape de relâchement de frein d'immobilisation (38, 380) pour raccorder soit le tuyau principal, soit le tuyau de sauvetage, au frein d'immobilisation lorsqu'une pression suffisante est disponible soit dans le tuyau principal, soit dans le tuyau d'immobilisation et relâcher le frein d'immobilisation à serrage par ressort lorsqu'une pression suffisante est disponible soit dans le tuyau principal, soit dans le tuyau de sauvetage pour déplacer le mécanisme de frein d'immobilisation vers la position de relâchement.

6. Système de frein pneumatique pour véhicule sur rail selon la revendication 5, dans lequel le moyen de soupape de relâchement de frein d'immobilisation est composé d'une ou plusieurs soupapes actionnées pneumatiquement (38, 80, 82).

7. Système de frein pneumatique pour véhicule sur rail selon la revendication 6, dans lequel au moins une des soupapes actionnées pneumatiquement du moyen de soupape de relâchement de frein d'immobilisation est commandée par la pression dans le tuyau de sauvetage.

8. Système de frein pneumatique pour véhicule sur rail selon la revendication 6 ou la revendication 7, dans lequel la ou les soupapes actionnées pneumatiquement du moyen de soupape de relâchement de frein d'immobilisation sont logées dans un corps commun.

9. Système de frein pneumatique pour véhicule sur rail selon l'une quelconque des revendications 5 à 8, dans lequel le moyen de soupape de relâchement de frein d'immobilisation comprend un moyen pour raccorder le tuyau de sauvetage à l'actionneur de frein à serrage par ressort et relâcher l'actionneur de frein à serrage par ressort lorsqu'une pression dans le tuyau de sauvetage s'élève au-dessus d'un premier seuil et au moyen de ventilation (82, 83) pour ventiler l'actionneur de frein d'immobilisation à serrage par ressort lorsque aucune pression n'est disponible dans le tuyau principal et la pression dans le tuyau de sauvetage est sous un second seuil, inférieur au premier seuil.

10. Système de frein pneumatique pour véhicule sur rail selon la revendication 9, dans lequel le moyen de soupape de relâchement de frein d'immobilisation comprend un moyen d'isolement (80) pour isoler le cylindre de frein d'immobilisation du tuyau de sauvetage lorsque la pression dans le tuyau de sauvetage est comprise entre le second seuil et le premier seuil.

11. Système de frein pneumatique pour véhicule sur rail selon l'une quelconque des revendications 7 à 10, dans lequel le moyen de relâchement de frein d'immobilisation inclut un sélecteur de circuit (38).

12. Système de frein pneumatique pour véhicule sur rail selon l'une quelconque des revendications 7 à 12, dans lequel le moyen de relâchement de frein d'immobilisation et le au moins un moyen de soupape de relâchement de frein à air sont situés dans un logement commun.

13. Véhicule sur rail comprenant le système de frein pneumatique selon l'une quelconque des revendications précédentes, dans lequel le tuyau de sauvetage n'est pas raccordé à une autre tuyauterie de véhicule sur rail qui contient de l'air comprimé dans les conditions normales.

14. Véhicule sur rail comprenant le système de frein pneumatique selon la revendication 7, comprenant en outre un robinet d'urgence (64) situé dans une carrosserie de voiture du véhicule sur rail pour ventiler le tuyau de sauvetage.

15. Véhicule sur rail comprenant une pluralité de wagons, chaque wagon étant muni d'un système de frein pneumatique selon l'une quelconque des revendications 1 à 13, le véhicule sur rail comprenant en outre des flexibles pour raccorder les tuyaux de sauvetage et construire une ligne d'alimentation de sauvetage continue.
